# EUROPÄISCHE PATENTANMELDUNG

(11) **EP 4 438 502 A2**
(43) Veröffentlichungstag der Anmeldung: **02.10.2024**
(21) Anmeldenummer: 24160160.8
(22) Anmeldetag: 28.02.2024
(51) Int. Cl.: B65B 5/06, B65B 35/40, B65B 35/46, B65B 35/52, B65B 35/56, B65B 5/10, B65B 19/02, B65B 35/58

(54) **VERPACKUNGSVERFAHREN UND- VORRICHTUNG FÜR KLEINSTÜCKIGE ARTIKEL MIT ÄNDERUNG DER ARTIKELORIENTIERUNG IN ARTIKELGRUPPEN ZWISCHEN PRIMÄR- UND SEKUNDÄRVERPACKUNG**

(30) Priorität: 22.03.2023 DE 102023107139
(71) Anmelder: Theegarten-Pactec GmbH & Co. KG, 01237 Dresden (DE)
(72) Erfinder: Irrgang, Sebastian, 01279 Dresden (DE); Ehlert, Sebastian, 01237 Dresden (DE); Schulte, Markus, 01097 Dresden (DE); Kloß, Paul, 01189 Dresden (DE)
(74) Vertreter: Grünecker Patent- und Rechtsanwälte PartG mbB

(57) **Zusammenfassung**

Die Erfindung betrifft ein Verfahren und eine Vorrichtung zur Verpackung kleinstückiger Artikel (A), wie Weich- oder Hartkaramellen, Schokoladenstücke, Pralinen, Konfekte, Brühtabletten, Waschmittel- oder Spülmitteltabs, wobei die Artikel (A) entlang wenigstens einer Artikelbahn (AB) gefördert, einzeln primärverpackt und zu einer Artikelgruppe (AG) gruppiert werden, wobei die Artikelorientierung bezüglich der Artikelbahn (AB) für alle Artikel (A) der Artikelgruppe (AG) gemeinsam geändert wird und die Artikel (A) in matrixförmiger Anordnung sekundärverpackt werden.

## Beschreibung

Die vorliegende Erfindung betrifft ein Verfahren und eine Vorrichtung zur Verpackung kleinstückiger Artikel, wobei eine Artikelorientierung in Artikelgruppen zwischen Primär- und Sekundärverpackung geändert wird. Primär- und Sekundärverpackung meint hier den Vorgang der Primärverpackung bzw. den Vorgang der Sekundärverpackung. Als kleinstückige Artikel werden im Rahmen der Erfindung insbesondere Weich- oder Hartkaramellen, Schokoladenstücke, Pralinen, Konfekte, Brühtabletten, Waschmittel- oder Spülmitteltabs bezeichnet, aber keine Zigaretten. Zigaretten sind keine kleinstückigen Artikel im Sinne der Erfindung, da Zigaretten nach anderen Kriterien gruppiert und verpackt werden, insbesondere nicht einzeln. Nach bekannten Verfahren werden die kleinstückigen Artikel entlang wenigstens einer Artikelbahn gefördert, einzeln primärverpackt und zu einer Artikelgruppe gruppiert sowie anschließend sekundärverpackt.

Da zur Verpackung der Artikel Falt- und Siegelorgane einer Verpackungsvorrichtung auf die Packmittelfalten und Siegelnähte einwirken, liegen die Packmittelfalten und Siegelnähte am Ende des Verpackungsvorgangs - prozesstechnisch bedingt - i.d.R. oben. Damit diese Packmittelfalten und Siegelnähte der Primärverpackung beim bestimmungsgemäßen Öffnen der Sekundärverpackung für den Verbraucher nicht sichtbar sind, müssen die Artikel zwischen Primär- und Sekundärverpackung gedreht werden, sodass die Packmittelfalten und Siegelnähte idealerweise - auf der Artikelunterseite liegend - durch den Artikel verdeckt sind. Beim bestimmungsgemäßen Öffnen der Sekundärverpackung ist dann die i.d.R. mit Werbe- oder Markenmotiven bedruckte Sichtseite des Artikels dem Verbraucher zugewandt und für diesen gut sichtbar.

Brühtabletten sind Beispiele solcher kleinstückiger Artikel, die u.a. aus hygienischen Gründen sowie zum Schutz vor Feuchtigkeit einzeln primärverpackt und in Gruppen als Gebinde sekundärverpackt werden. Brühwürfel werden aus Pulver gepresst und wirken aufgrund des hohes Salzgehalts anziehend für Feuchtigkeit. Brühwürfel werden nach der Primärverpackung bisher nur ungeordnet in einem Wendekanal gedreht. Ein geordnetes Drehen von primärverpackten Einzelprodukten bei einer hohen Ausbringungsleistung von bis zu 1.500 Stück pro Minute und Artikelbahn ist bislang nicht bekannt. Im Wendekanal geht jedoch die Ordnung verloren, sodass die primärverpackten Einzelprodukte vor der Sekundärverpackung neu ausgerichtet und sortiert werden müssen. Dies ist aufwendig, ist aber eine Grundvoraussetzung für die Gruppierung im Hochleistungsbereich.

Ein Verfahren und eine Vorrichtung der eingangs genannten Art sind aus der DE 10 2016 115 635 A1 bekannt. Die aus der DE 10 2016 115 635 A1 bekannte Stapeltechnik zur Bildung von Artikelgruppen ist nur für begrenzte Gebindegröße mit bis zu 16 Artikeln in der Sekundärverpackung ausgelegt (vgl. Abs. [0041]).

Ausgehend von den o.g. Erkenntnissen liegt der vorliegenden Erfindung die Aufgabe zugrunde, ein Verfahren und eine Vorrichtung der eingangs genannten Art unter Vermeidung der bisher bekannten Nachteile zu verbessern.

Zur Lösung der eingangs genannten Aufgabe stellt die vorliegende Erfindung das Verfahren nach Anspruch 1 und die Vorrichtung nach Anspruch 12 bereit.

Das erfindungsgemäße Verfahren dient zur Verpackung kleinstückiger Artikel, wie Weich- oder Hartkaramellen, Schokoladenstücke, Pralinen, Konfekte, Brühtabletten, Waschmittel- oder Spülmitteltabs. Erfindungsgemäß werden die Artikel entlang wenigstens einer Artikelbahn gefördert, einzeln primärverpackt und zu einer Artikelgruppe gruppiert, wobei die Artikelorientierung bezüglich der Artikelbahn für alle Artikel der Artikelgruppe gemeinsam geändert wird und die Artikel in matrixförmiger Anordnung sekundärverpackt werden.

Durch die matrixförmige Anordnung der Artikel in der Sekundärverpackung können im Vergleich zu DE 10 2016 115 635 A1 deutlich größere Gebinde erstellt werden. Vorzugsweise liegen alle Artikel einer zweidimensional matrixförmigen Anordnung in einer Ebene, wobei die größten Seitenflächen aller Artikel der Artikelgruppe, bevorzugt jeweils bündig zueinander, in zwei parallelen Ebenen ausgerichtet sind und/oder die kleinsten Seitenflächen der Artikel einander kontaktieren. Es ist aber auch möglich, dass die kleinsten Seitenflächen aller Artikel der Artikelgruppe, bevorzugt jeweils bündig zueinander liegend, in zwei parallelen Ebenen ausgerichtet sind und/oder die größten Seitenflächen der Artikel einander kontaktieren. Vorzugsweise werden mehrere Lagen aus zweidimensional matrixförmig angeordneten Artikelgruppen gebildet und die Artikel somit in der Sekundärverpackung gemeinsam in dreidimensional matrixförmiger Anordnung verpackt. Bei der DE 10 2016 115 635 A1 werden die Artikel/Produkte zudem in einer ersten Richtung gefördert, in einer zweiten Richtung zur Produktformation angestapelt und zur Änderung der Artikelorientierung in einer dritten Richtung in ein Drehrad eingegeben. Bei der vorliegenden Erfindung sind zur Bildung der Artikelgruppen in matrixförmiger Anordnung lediglich Bewegungen in zwei Bewegungsrichtungen erforderlich, was den Aufbau und die Komplexität der Vorrichtung vereinfachen kann.

Die Erfindung ändert sinngemäß die für Brühwürfel herkömmliche Prozessreihenfolge, wonach die primärverpackten Artikel einzeln gedreht und zur Sekundärverpackung gruppiert wurden, dahingehend, dass die primärverpackten Artikel nun bereits vor der Änderung der Artikelorientierung gruppiert und dann als Artikelgruppe gemeinsam gedreht werden. Dabei kann die matrixförmige Anordnung der Artikel auch mehrstufig bzw. in mehreren Teilschritten gebildet werden. So ist es möglich, zuerst eine Artikelreihe zu bilden, z.B. durch Artikelstau auf einer Artikelbahn, diese Artikelreihe gemeinsam zu drehen und von der Sekundärverpackung mit weiteren Artikelreihen eine Artikellage in matrixförmiger Anordnung der Artikel in Zeilen und Spalten zu bilden. Alternativ dazu ist es auch möglich, bereits vor dem Drehen einer Artikelgruppe eine matrixförmige Anordnung von Artikeln in zwei oder drei Dimensionen zu bilden (horizontal und/oder vertikal) und diese Anordnung auch nach der Änderung der Artikelorientierung zur Sekundärverpackung beizubehalten. In beiden genannten Fällen wird jeweils eine Artikelgruppe - in Form einer eindimensionalen Artikelreihe oder einer zweidimensional matrixförmigen Artikellage oder gestapelten Artikelreihe oder einer dreidimensional matrixförmigen Artikelanordnung z.B. aus gestapelten Artikellagen oder aneinandergereihten mehrlagigen Artikelreihen - gemeinsam gedreht bzw. die Artikelorientierung für diese Gruppe von Artikeln gemeinsam geändert. Dadurch verlangsamt sich der kritische Prozess der Änderung der Artikelorientierung erheblich. Bereits wenn die Änderung der Artikelorientierung für eine aus zwei Artikeln bestehende Artikelgruppe gemeinsam geändert wird, halbiert sich die Anzahl die dafür erforderlichen Prozessschritte, bei einer aus mehr als zwei Artikeln bestehenden Artikelgruppe um ein entsprechendes Vielfaches.

Vorteilhafte Weiterbildungen sind Gegenstände der abhängigen Ansprüche.

Es kann von Vorteil sein, wenn jeder primärverpackte Artikel an einer Artikelseite überlappende Packmittelfalten und/oder eine Siegelnaht der Primärverpackung aufweist, wobei eine Ausrichtung dieser Artikelseite bezüglich der Artikelbahn bei Änderung der Artikelorientierung verändert wird, wobei vorzugsweise diese Artikelseite vor Änderung der Artikelorientierung nach oben weist und/oder nach Änderung der Artikelorientierung nach unten weist. In der nach Änderung der Artikelorientierung erhaltenen Anordnung werden die Artikel vorzugsweise sekundärverpackt.

Es kann sinnvoll sein, wenn die Artikel vor Änderung der Artikelorientierung zu einer eindimensionalen Artikelgruppe gruppiert werden, vorzugsweise zu einer ersten Artikelgruppe, insbesondere Artikelreihe, bevorzugt durch Erzeugen eines Artikelstaus entlang der Artikelbahn. Durch Erzeugen eines Artikelstaus lassen sich die Artikel besonders einfach zu einer eindimensionalen Basis-Artikelgruppe gruppieren. Dies eröffnet verschiedene Möglichkeiten zur Bildung mehrdimensionaler Artikelgruppen aus mehreren vergleichbaren eindimensionalen Basis-Artikelgruppen.

Es kann hilfreich sein, wenn die Artikel vor oder nach Änderung der Artikelorientierung zu einer zweidimensionalen Artikelgruppe gruppiert werden, vorzugsweise durch Verbinden mehrerer erster Artikelgruppen zu einer zweiten Artikelgruppe, bevorzugt durch Aneinanderreihen mehrerer Artikelreihen zu einer Artikellage, insbesondere quer zur Artikelbahn, und/oder durch Stapeln mehrerer Artikelreihen zu einer mehrlagigen Artikelreihe, insbesondere quer zur Artikelbahn. Besonders bevorzugt sind alle Artikel der zweiten Artikelgruppe jeweils in derselben Ebene angeordnet, ganz besonders bevorzugt in einer die Artikelbahn einschließenden Ebene. Vorzugsweise liegen jeweils zwei voneinander abweisende und parallele Seitenflächen der Artikel bündig zueinander in parallelen Ebenen. Vorzugsweise kontaktieren sich die Artikel an Seitenflächen, die zu den bündig zueinander ausgerichteten Seitenflächen benachbart sind. Besonders bevorzugt bleibt die vor Änderung der Artikelorientierung erzeugte Artikelgruppe auch nach nach Änderung der Artikelorientierung erhalten und die Artikel werden in derselben Artikelgruppe, ggf. in Verbindung mit weiteren identischen Artikelgruppen, sekundärverpackt.

Es kann von Nutzen sein, wenn die Artikel vor oder nach Änderung der Artikelorientierung zu einer dreidimensionalen Artikelgruppe gruppiert werden, vorzugsweise durch Verbinden mehrerer zweiter Artikelgruppen zu einer dritten Artikelgruppe, bevorzugt durch Aneinanderreihen mehrerer mehrlagiger Artikelreihen, insbesondere quer zur Artikelbahn, und/oder durch Stapeln mehrerer Artikellagen, insbesondere quer zur Artikelbahn. In dieser dreidimensionalen und kompakten Anordnung lassen sich die gruppierten Artikel leicht transportieren und verpacken.

Es kann sich als nützlich erweisen, wenn die Artikel identisch geformt sind, vorzugsweise quaderförmig, bevorzugt würfelförmig. Dies erleichtert die kompakte Anordnung der Artikel in Artikelgruppen und vereinfacht die Handhabung, da z.B. identische Faltorgane und Packmittelzuschnitte für die Primärverpackung verwendet werden können. Die paarweise parallelen Seitenflächen eines quaderförmigen/würfelförmigen Artikels eignen besonders gut für die Bildung von mehrdimensionalen Artikelgruppen, da die Artikel einander lückenlos kontaktieren können. Andere Artikelformen sind jedoch ebenfalls möglich.

Es kann praktisch sein, wenn alle Artikel der Artikelgruppe jeweils die gleiche Artikelorientierung bezüglich der Artikelbahn aufweisen. Auch diese Maßnahme erleichtert die kompakte Anordnung der Artikel in Artikelgruppen und vereinfacht die Handhabung, weil dann alle Artikel gleich behandelt werden können. Das gilt insbesondere für die primärverpackten Artikel, d.h. Artikel inklusive Primärpackmittel.

Es kann sich als hilfreich erweisen, wenn die Änderung der Artikelorientierung durch Drehung der Artikelgruppe erfolgt, vorzugsweise um 90° oder 180°, bevorzugt um eine horizontale, insbesondere um eine außerhalb der Artikelgruppe liegende Drehachse, wobei besonders bevorzugt alle Artikel der Artikelgruppe bei Änderung der Artikelorientierung in einer Tangentialebene zur Drehachse angeordnet sind. Dadurch kann z.B. eine mit Packmittelfalten und/oder eine mit einer Siegelnaht versehende Artikelseite auf einfache Weise von dem Artikel verdeckt werden.

Es kann von Nutzen sein, wenn die Artikel auf einer Mehrzahl von Artikelbahnen primärverpackt werden und, vorzugsweise nach Gruppierung und ggf. Änderung der Artikelorientierung, zur Sekundärverpackung in eine einzelne Artikelbahn überführt werden. Dadurch kann das erfindungsgemäße Verfahren eine hohe Ausbringungsleistung erreichen.

Es kann zweckdienlich sein, wenn die Artikel in dreidimensional matrixförmiger Anordnung sekundärverpackt werden. Dazu können mehrere Artikellagen aufeinander gestapelt werden, insbesondere zwei, drei oder vier Lagen. Alternativ können bereits gestapelte Artikelreihen aneinandergereiht werden, um eine dreidimensionale Artikelgruppe zu ergeben. Dies ermöglicht besonders kompakte Gebinde, welche die Handhabung und insbesondere den Transport solcher Artikel in großen Stückzahlen erheblich erleichtern.

Es kann sich als vorteilhaft erweisen, wenn die Artikelgruppen in Kartons oder Schlauchbeuteln sekundärverpackt werden. Solche Sekundärverpackungen lassen sich nach dem erfindungsgemäßen Verfahren besonders einfach befüllen. Ein Karton als Sekundärverpackung kann vorzugsweise zwischen einer und vier Artikellagen enthalten, wobei jede Artikellage vorzugsweise zwei bis vier Artikelreihen mit jeweils vier bis acht Artikeln umfassen kann. Jede Artikellage oder gestapelte Artikelreihe bildet eine zweidimensionale Artikelmatrix. Mehrlagig gestapelte Artikellagen bilden demnach eine dreidimensionale Artikelmatrix. Ein Schlauchbeutel als Sekundärverpackung umfasst vorzugsweise lediglich eine Artikellage mit zwei Artikelreihen mit jeweils drei bis fünf Artikel. Vorzugsweise liegen alle Artikel der im Schlauchbeutel sekundärverpackten Artikellage mit der mit überlappenden Packmittelfalten und/oder Siegelnähten versehenen Seite auf einer gemeinsamen Unterlage wie einem Pappstreifen, um die Artikel in einer Ebene auszurichten.

Ein weiterer unabhängiger Aspekt der vorliegenden Erfindung betrifft eine Vorrichtung zur Verpackung kleinstückiger Artikel, wie Weich- oder Hartkaramellen, Schokoladenstücke, Pralinen, Konfekte, Brühtabletten, Waschmittel- oder Spülmitteltabs, insbesondere nach dem Verfahren einer der vorangehenden Ausführungen, wobei die Vorrichtung konfiguriert ist, um die Artikel entlang wenigstens einer Artikelbahn zu fördern, einzeln primär zu verpacken und zu einer Artikelgruppe zu gruppieren, wobei die Vorrichtung ferner dazu konfiguriert ist, die Artikelorientierung bezüglich der Artikelbahn für alle Artikel der Artikelgruppe gemeinsam zu ändern und die Artikel in matrixförmiger Anordnung sekundär zu verpacken. Die für das erfindungsgemäße Verfahren genannten Vorteile ergeben sich für die erfindungsgemäße Vorrichtung analog.

In einer vorteilhaften Weiterbildung umfasst die Vorrichtung wenigstens eine der folgenden Einrichtungen:
a. Eine Artikelbereitstellungseinrichtung, um Artikel mit vorzugsweise identischer Form, Größe und Ausrichtung auf einer oder mehreren Artikelbahnen bereitzustellen, wobei die Artikelbereitstellungseinrichtung bevorzugt als Brühwürfelpresse ausgebildet ist.
b. Eine Primärverpackungseinrichtung, um die Artikel auf einer oder mehreren Artikelbahnen einzeln primär zu verpacken, wobei ein Packmittel der Primärverpackung vorzugsweise in Brieffaltung, Bodenfaltung oder Seitenfaltung gefaltet wird.
c. Eine Arbeitseinrichtung, um die primärverpackten Artikel in Artikelgruppen zu gruppieren, und um die Artikelorientierung bezüglich der Artikelbahn für alle Artikel der Artikelgruppe gemeinsam zu ändern.
d. Eine Sekundärverpackungseinrichtung, um die Artikel in matrixförmiger Anordnung sekundär zu verpacken, vorzugsweise auf einer Artikelbahn, wobei die Sekundärverpackungseinrichtung bevorzugt als Kartonierer oder als Schlauchbeutelverpackungsmaschine ausgebildet ist.

Es kann von Nutzen sein, wenn die Arbeitseinrichtung wenigstens eine der folgenden Einrichtungen aufweist:
a. Eine Fördereinrichtung, um die Artikel einzeln und kontinuierlich entlang der Artikelbahn zu fördern, vorzugsweise mit einem gesonderten Förderband für jede Artikelbahn.
b. Eine Gruppiereinrichtung, um die Artikel zu wenigstens einer der folgende Artikelgruppen zu gruppieren:
   i. Einer eindimensionalen Artikelgruppe, bevorzugt einer Artikelreihe, besonders bevorzugt durch Erzeugen eines Produktstaus entlang der Artikelbahn.
   ii. Einer zweidimensionalen Artikelgruppe, bevorzugt einer Artikellage durch Aneinanderreihen mehrerer Artikelreihen, insbesondere quer zur Artikelbahn, oder einer mehrlagigen Artikelreihe durch Stapeln von Artikelreihen, insbesondere quer zur Artikelbahn.
   iii. Einer dreidimensionalen Artikelgruppe, bevorzugt durch Aneinanderreihen mehrerer mehrlagiger Artikelreihen, insbesondere quer zur Artikelbahn, oder durch Stapeln mehrerer Artikellagen, insbesondere quer zur Artikelbahn.
c. Eine Dreheinrichtung, um alle Artikel der Artikelgruppe gemeinsam um eine Drehachse zu drehen, vorzugsweise um 90° oder 180°, bevorzugt um eine horizontale, insbesondere um eine außerhalb der Artikelgruppe liegende Drehachse, wobei besonders bevorzugt alle Artikel der Artikelgruppe bei Änderung der Artikelorientierung matrixförmig in einer Tangentialebene zur Drehachse angeordnet sind.
d. Eine Artikelgruppenweiche, um die Artikelgruppen aus einer Mehrzahl von Artikelbahnen zur Sekundärverpackung in eine einzelne Artikelbahn zu überführen.

Weitere bevorzugte Weiterbildungen der Erfindung ergeben sich durch Kombinationen der Merkmale der Patentansprüche mit Merkmalen, die in der Beschreibung und/oder den Figuren offenbart sind.

### Begriffe und Definitionen

Als kleinstückige Artikel werden im Rahmen der Erfindung beispielsweise Artikel wie Hart- oder Weichkaramellen (Bonbons bzw. Kaubonbons), Schokoladenstücke, Pralinen, Konfekt, Brüherzeugnisse wie Brühtabletten oder Brühwürfel, aber auch Verbrauchsgüter wie Waschmittel oder Spülmitteltabs bezeichnet, jedoch keine Zigaretten. Die genannten kleinstückigen Artikel weisen vorzugsweise eine identische Größe und Grundform auf. Die Grundform der kleinstückigen Artikel ist vorzugsweise quaderförmig, insbesondere würfelförmig, jedoch nicht eingeschränkt, soweit das Erfindungskonzept auch auf andere Artikelformen anwendbar ist.

Die Abmessungen der Artikel liegen vorzugsweise innerhalb der folgenden Bereiche:

| | | |
|---|---|---|
| - Länge: | 13 | bis 35 mm |
| - Breite: | 13 | bis 25 mm |
| - Höhe: | 6 | bis 20 mm |

Die Breite wird vorzugsweise in Förderrichtung gemessen, die Länge quer zur Förderrichtung in der Förderebene, insbesondere horizontal, und die Höhe senkrecht zur Förderebene.

Die Primärverpackung ist eine Einzelverpackung um jeden Artikel und dient vorwiegend dem Zweck, den einzelnen Artikel nach Öffnen der Sekundärverpackung vor Umwelteinflüssen wie Sonnenlicht, Feuchtigkeit oder Oxidation zu schützen.

Als Packmittel für die Primärverpackung werden vorzugsweise folgende Materialien verwendet, bevorzugt einzeln oder in Kombination, besonders bevorzugt als Blatt oder Folie, insbesondere als Materialverbund:
- Metall, vorzugsweise Aluminium
- Kunststoff, vorzugsweise thermoplastischer Kunststoff, bevorzugt Polyproplyen (PP), besonders bevorzugt orientiertes Polyproplyen (OPP)
- Papier

Als Packmittel für die Primärverpackung wird vorzugsweise eine der folgenden Ausführungen verwendet:
- Aluminium/Papier kaschiert - siegelfähig
- Aluminium/OPP kaschiert - siegelfähig
- Metallisiertes OPP

Die Sekundärverpackung bildet ein Gebinde aus einer Vielzahl von primärverpackten Artikeln in zwei- oder dreidimensional matrixförmiger Anordnung, d.h. in einer oder mehreren Lagen, zur Erleichterung der Lagerung und des Transports. Als Sekundärverpackung dient vorzugsweise ein Karton oder ein Schlauchbeutel.

Der Begriff matrixförmig ist zwei- oder dreidimensional zu verstehen.

In einer zweidimensional matrixförmigen Anordnung sind die Artikel in zwei Dimensionen (z.B. Länge und Breite; Länge und Höhe) bzw. entlang zweier senkrecht stehender Achsen aneinandergereiht. In einer horizontalen Matrix sind die Produkte entlang zweier horizontaler Achsen (entlang x-Achse in Förderrichtung bzw. "Breite" sowie entlang y-Achse in Förderebene senkrecht zur Förderrichtung bzw. "Länge") aneinandergereiht. In einer vertikalen Matrix sind die Produkte entlang einer horizontalen Achse (x-Achse in Förderrichtung oder y-Achse in Förderebene senkrecht zur Förderrichtung) und einer vertikalen Achse (z-Achse senkrecht zur Förderebene bzw. "Höhe") aneinandergereiht.

In einer dreidimensional matrixförmigen Anordnung sind die Artikel in drei Dimensionen bzw. entlang dreier senkrecht stehender Achsen (z.B. Länge, Breite und Höhe) aneinandergereiht.

Der Begriff Artikelgruppe bezeichnet eine gruppenförmige Anordnung von Artikeln. Eine Artikelgruppe kann beispielsweise vorliegen als:
- eindimensionale Artikelgruppe, insbesondere Artikelreihe.
- zweidimensionale Artikelgruppe, insbesondere als gestapelte Artikelreihe, Artikellage oder Artikelmatrix, wobei die Artikel eine horizontal oder vertikal matrixförmige Anordnung aufweisen.
- dreidimensionale Artikelgruppe, insbesondere dreidimensionale Artikelmatrix, beispielsweiese als mehrlagig gestapelte Artikellagen oder Aneinanderreihung von mehreren mehrlagigen Artikelreihen.

### Kurze Beschreibung der Figuren

Es zeigen:

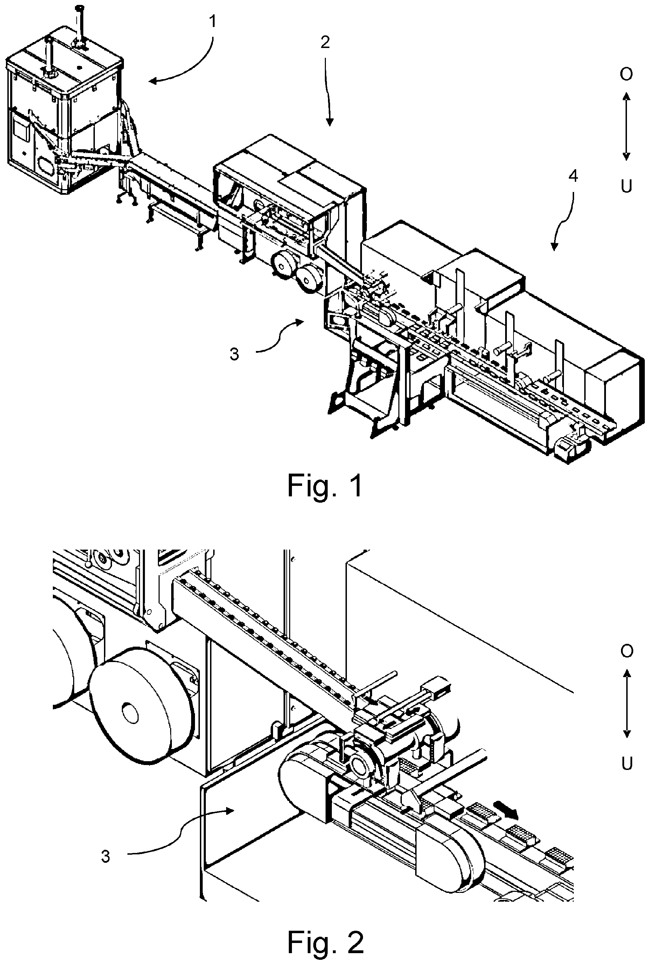

Fig. 1 eine perspektivische Ansicht einer erfindungsgemäßen Verpackungsvorrichtung zur Durchführung des erfindungsgemäßen Verpackungsverfahren nach einem ersten Ausführungsbeispiel der Erfindung, umfassend eine Artikelbereitstellungseinrichtung, beispielsweise in Form einer Brühwürfelpresse, eine Primärverpackungseinrichtung, welche die entlang mehrerer paralleler Artikelbahnen geförderten Artikel einzeln verpackt, eine Arbeitseinrichtung, welche die entlang mehrerer paralleler Artikelbahnen geförderten und einzeln verpackten Artikel gruppiert und die Artikelorientierung durch Drehung der Artikelgruppen um 180° ändert, anschließend die entlang mehrerer paralleler Artikelbahnen geförderten Artikelgruppen aus einzelnen primär verpackten Artikeln in eine Artikelbahn überführt, und eine Sekundärverpackungseinrichtung, welche die Artikelgruppen aus primär verpackten Artikeln in einer oder mehreren Lagen in matrixförmiger Anordnung in einer Sekundärverpackung verpackt.
Figur 2 eine vergrößerte Detailansicht der Arbeitseinrichtung aus Figur 1.
Figur 3 eine nochmals vergrößerte Detailansicht der Arbeitseinrichtung aus Figur 2.
Figur 4 eine schematische Ansicht der Arbeitseinrichtung aus Figur 3, wobei die Arbeitsorgane der Arbeitseinrichtung zur Darstellung der Bewegungen der Artikel und Artikelgruppen teilweise weggelassen sind.
Figur 5 eine Detailansicht einer Untereinheit der Arbeitseinrichtung aus den Figuren 1 bis 4, die insbesondere zur Bildung von Artikelreihen durch Erzeugung eines Produktstaus entlang jeder Artikelbahn ausgebildet ist.
Figur 6 eine Detailansicht einer Untereinheit der Arbeitseinrichtung aus den Figuren 1 bis 5, die insbesondere zum Bilden von Artikellagen durch Aneinanderreihen mehrerer Artikelreihen quer zu jeder Artikelbahn ausgebildet ist.
Figur 7 eine Detailansicht der Arbeitseinrichtung aus den Figuren 1 bis 3.
Figur 8 eine Detailansicht einer Artikelgruppenweiche der Arbeitseinrichtung aus den Figuren 1 bis 3, die insbesondere zum Überführen von Artikelgruppen aus einer Mehrzahl von Artikelbahnen in eine einzige Artikelbahn ausgebildet ist.

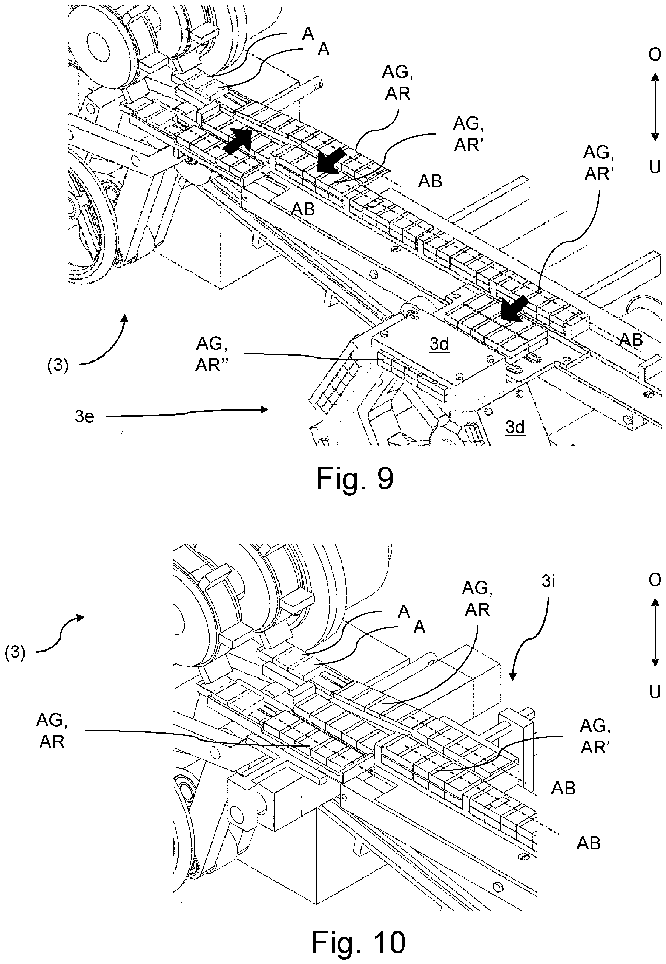

Fig. 9 eine perspektivische Detailansicht einer Arbeitseinrichtung einer erfindungsgemäßen Verpackungsvorrichtung zur Durchführung des erfindungsgemäßen Verpackungsverfahren nach einem zweiten Ausführungsbeispiel der Erfindung, wobei die Arbeitseinrichtung durch Erzeugen eines Artikelstaus in mehreren parallelen Artikelbahnen Artikelreihen bildet und die Artikelreihen in einer weiteren Artikelbahn durch Stapeln der Artikelreihen zu einer zweidimensionalen Artikelgruppe bzw. Artikelmatrix zusammenführt, anschließend mehrere gestapelte Artikelreihen zu einer dreidimensional matrixförmigen Artikelanordnung bzw. Artikelgruppe vereint und die Artikelorientierung durch Drehung der Artikelgruppen um 180° ändert.
Fig. 10 eine vergrößerte Detailansicht der Arbeitseinrichtung aus Figur 9, welche insbesondere das Stapeln der Artikelreihen zeigt.
Figur 11 eine schematische Ansicht der Arbeitseinrichtung aus Figur 9, wobei die Arbeitsorgane der Arbeitseinrichtung zur Darstellung der Bewegungen der Artikel und Artikelgruppen teilweise weggelassen sind.

### Detaillierte Beschreibung des bevorzugten Ausführungsbeispiels

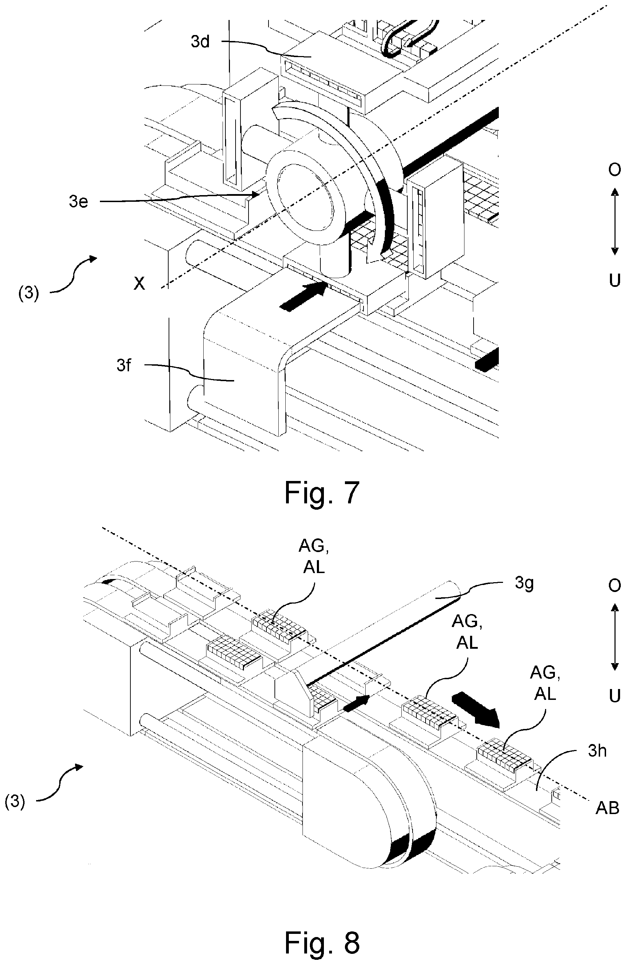

### Erstes Ausführungsbeispiel (Fig. 1 bis 8)

Das bevorzugte Ausführungsbeispiel der vorliegenden Erfindung wird nachstehend mit Bezug auf die beiliegenden Zeichnungen im Detail beschrieben.

Die vorliegende Erfindung betrifft ein Verpackungsverfahren und eine Verpackungsvorrichtung für kleinstückige Artikel A, wobei eine Artikelorientierung in Artikelgruppen AG zwischen Primär- und Sekundärverpackung geändert wird.

Eine Artikelbereitstellungseinrichtung 1, z.B. eine Brühwürfelpresse, stellt hierbei eine Vielzahl von Artikel A bereit, die in den nachgeschalteten Verpackungsvorgängen zunächst einzeln primär verpackt und dann in Artikelgruppen AG sekundär verpackt werden. Die Ausbringungsleistung dieser Artikelbereitstellungseinrichtung 1 liegt bei vorzugsweise 500 bis 2.000 Artikeln A pro Minute und Artikelbahn AB, d. h. bei 1.000 bis 4.000 Artikeln A pro Minute auf zwei Artikelbahnen AB.

Die aus der Artikelbereitstellungseinrichtung 1 ausgeschleusten Artikel A werden sodann auf mehreren Artikelbahnen AB in Parallelführung in die Primärverpackungseinrichtung 2 eingebracht. Nach einem bekannten Wirkprinzip werden die Artikel A auf parallelen Artikelbahnen AB sodann in Parallelführung einzeln primärverpackt. Dabei wird vorzugsweise jedem Artikel A zunächst ein beispielsweise bedruckter Packmittelzuschnitt zugeordnet und in Brieffaltung, Bodenfaltung oder Seitenfaltung um den Artikel A gefaltet, sodass mehrere Packmittelfalten an einer Artikelseite, vorzugsweise dem nach oben weisenden Artikelboden, überlappen und mittels einer Siegelnaht fixiert werden können. Prozesstechnisch bedingt liegen die Packmittelfalten und ggf. Siegelnähte am Ende der Primärverpackungseinrichtung 2 oben, weil die Falt- und Siegelorgane so am besten auf das Packmittel der Primärverpackung einwirken können.

Zur Sekundärverpackung der Artikel A ist es aber wünschenswert, die meist mit einem Dekor oder Werbedruck versehene Oberseite des Artikels A nach oben auszurichten, sodass die Packmittelfalten und Siegelnähte beim Öffnen der Sekundärverpackung in der bestimmungsgemäßen Anordnung vom Artikel A verdeckt sind. Aus diesem Grund werden die primärverpackten Artikel A vor der Sekundärverpackung um 180° gedreht, wie im Folgenden erläutert wird:

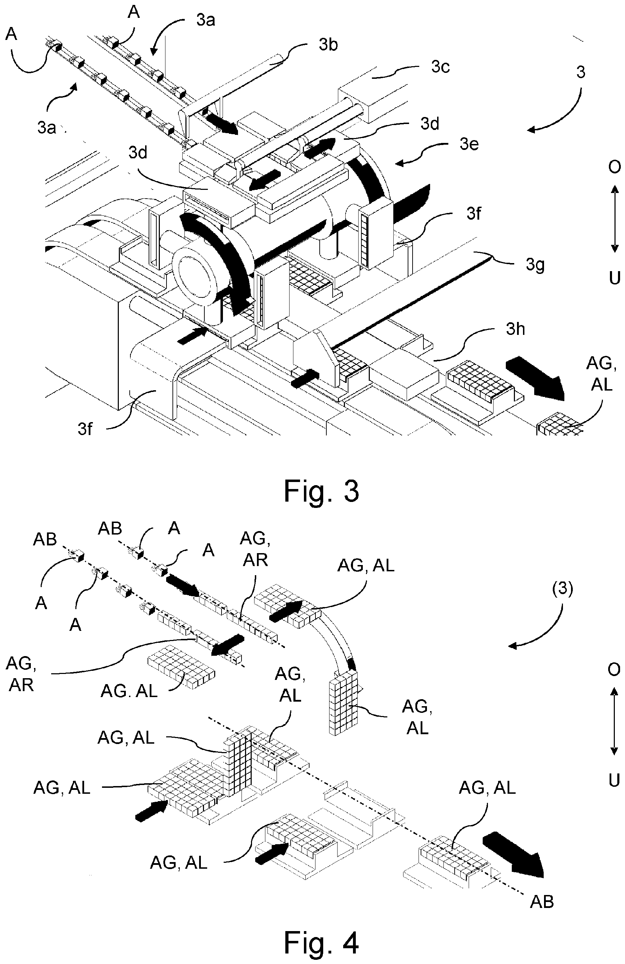

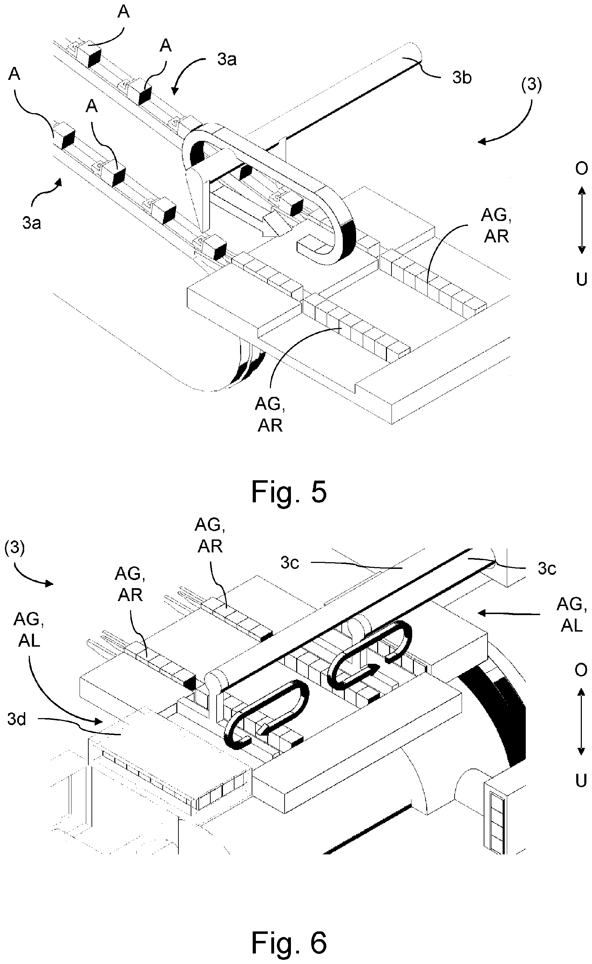

Die vereinzelten und primärverpackten Artikel A werden auf den parallelen Förderbändern 3a in die Arbeitseinrichtung 3 eingeschleust und auf jeder Artikelbahn AB unter Eliminierung von Fehlstellen mittels eines Lückenschließers 3b in Förderrichtung entlang der Arbeitsbahnen AB zu eindimensionalen Artikelgruppen AG in Gestalt von Artikelreihen AR angestaut, wie anschaulich in Figur 4 und 5 dargestellt ist. Die sich ergebenden Artikelreihen AR mit beispielsweise jeweils vier bis zehn in gleicher Artikelorientierung aneinander liegenden Artikeln A werden sodann von einem Querschieber 3c quer zu jeder Artikelbahn AB in beispielsweise vier Reihen in der bereitstehenden Artikelaufnahme 3d eines Drehrades 3e aneinandergereiht, um eine zweidimensionale Artikelgruppen AG in Gestalt einer Artikellage AL zu bilden, wie anschaulich in Figur 6 dargestellt ist. In jeder Artikelaufnahme 3d des Drehrades 3e befindet sich dann eine gesamte Artikellage AL mit jeweils einer Vielzahl von Artikeln A, die in gleicher Artikelorientierung zweidimensional matrixförmig in (z.B. vier) Zeilen bzw. Artikelreihen AR und (z.B. acht) Spalten angeordnet sind.

Die Drehung des Drehrades 3e erfolgt diskontinuierlich in einer auf die Zuführleistung der Primärverpackungseinrichtung 2 bzw. der Artikelbereitstellungseinrichtung 1 abgestimmten Taktung. Nach Drehung des Drehrades 3e um eine zentrale, insbesondere horizontale, Drehachse X werden die zweidimensionalen Artikelgruppen AG bzw. Artikellagen AL mithilfe von Ausschiebern 3f aus den Artikelaufnahmen 3d des Drehrades 3e ausgeschoben und auf zwei parallelen Förderbändern 3h weitertransportiert. In einer nachgelagerten Artikelgruppenweiche werden die Artikelgruppen AG mit einem weiteren Querschieber 3g aus zwei parallelen Artikelbahnen AB in eine gemeinsame Artikelbahn AB überführt. Die Artikelgruppen AG werden dann entlang einer Artikelbahn AB auf einem Förderband 3h der nachgelagerten Sekundärverpackungseinrichtung 4 zugeführt, bedarfsweise in mehreren Lagen gestapelt und anschließend in dreidimensional matrixförmiger Anordnung sekundär verpackt, um ein Gebinde aus einer Vielzahl von jeweils matrixförmig in mehreren Lagen angeordneten, primärverpackten Artikeln A zu bilden.

Der wesentliche Vorteil der vorliegenden Erfindung besteht im Wesentlichen darin, dass die Artikel A einzeln primärverpackt werden, aber die Artikelorientierung gruppenweise, d.h. in Artikelreihen AR, Artikellagen AL oder gar gestapelten Artikelreihen AR' oder gestapelten Artikellagen bzw. in zwei- oder dreidimensional matrixförmiger Anordnung als Artikelgruppen AG verändert wird. Dadurch kann die Anzahl an Arbeitsorganen und Arbeitstakten einer Arbeitseinrichtung 3 im Vergleich zur individuellen Änderung der Artikelorientierung deutlich verringert werden.

Im oben genannten Beispiel ist das Drehrad 3e beispielsweise derart getaktet, dass es sich nach dem Befüllen jeder Artikelaufnahme 3d mit jeweils einer aus 32 Artikeln A bestehenden Artikelgruppe AG bzw. Artikellage AL um 90° weiterdreht. Pro voller Umdrehung kann das Drehrad 3e folglich 128 Artikel A pro Artikel Bahn AB, d. h. 256 Artikel auf zwei Artikelbahnen AB, transportieren und somit die Artikelorientierung bezüglich der Artikelbahnen AB aller Artikel A einer Artikelgruppe A gemeinsam verändern. Bei einer Ausbringleistung von 3.000 Artikeln pro Minute auf zwei Artikelbahnen AB sind also nur 12 Umdrehungen pro Minute (also 1 Umdrehung/5s) des Drehrades 3e erforderlich, um die Artikelorientierung aller Artikel A bestimmungsgemäß zu ändern.

Mögliche Abwandlungen und Varianten der Erfindung lassen sich wie folgt beschreiben:
Nach Abgabe der primärverpackten Artikel A aus der Primärverpackungseinrichtung 2 mit einer definierten Teilung wird zunächst eine Artikelreihe AR von X Artikeln durch Anstauen entlang der Artikelbahn B gebildet. Im Anschluss an die Eingabe der Artikelreihe AR in das Dreh- bzw. Wenderad 3e erfolgt das Drehen der Artikelreihe AR durch Rotation des Dreh- bzw. Wenderades 3e. Auf den Ausschub der gedrehten Artikelreihe AR aus dem Dreh- bzw. Wenderad 3e wird eine Artikellage AL gebildet.

Alternativ dazu wird nach Abgabe der primärverpackten Artikel A aus der Primärverpackungseinrichtung 2 mit einer definierten Teilung eine Artikelreihe AR von X Artikeln durch Anstauen entlang der Artikelbahn B gebildet. Durch mehrfache Eingabe einer Artikelreihe AR in das Dreh- bzw. Wenderad 3e kann eine Artikellage AL gebildet werden. Im Anschluss an das Drehen der Artikellage AL durch Rotation des Dreh- bzw. Wenderades 3e wird die gesamte Artikellage AL aus dem Dreh- bzw. Wenderad 3e ausgeschleust und mit geänderter Artikelorientierung sekundärverpackt.

Im vorliegenden Ausführungsbeispiel kann die Bildung der Artikelgruppen AG wie folgt bewerkstelligt werden:
Die Artikel A werden in jeder Artikelbahn AB aus der Primärverpackungseinrichtung 2 geordnet übernommen (z.B. von einem als Nockenband ausgebildeten Förderband 3a) und kontinuierlich gefördert.

Anschließend wird eine Artikelreihe AR gebildet, in dem das Nockenband 3a den Artikel A durch das Abtauchen des Nockens an der Umlenkung ablegt. Durch Wiederholung dieses Vorgangs bildet sich eine Artikelreihe AR. Durch ein Kammgetriebe wird die Artikelreihe AR in den Übergabebereich des Dreh- bzw. Wenderad 3e gefördert und von dort seitlich mittels eines Querschiebers 3c in das Dreh- bzw. Wenderad 3e eingeschoben.

Durch das mehrfache Einschieben der Artikelreihen AR quer zur Artikelbahn AB entsteht eine Artikellage AL.

Das Dreh- bzw. Wenderad 3e dreht die gesamte Artikellage AL und ändert dabei die Artikelorientierung bezüglich der Artikelbahn AB für alle Artikel A dieser Artikelgruppe AG gemeinsam.

Der wesentliche Vorteil der Erfindung liegt demnach im Verschieben des limitierenden Prozessschrittes "Drehen" der Artikel A nach hinten, sodass durch vorangehende Bildung von eindimensionalen Artikelgruppen AG wie Artikelreihen AR oder zweidimensionalen Artikelgruppen AG wie Artikellagen AL oder gar dreidimensionalen Artikelgruppen AG wie gestapelten Artikellagen die Taktleistung für das Drehen reduziert wird. Dadurch können die Artikel A in der gewünschten Geschwindigkeit und Artikelorientierung geordnet an die Sekundärverpackungseinrichtung 4 übergeben werden. Dort werden die Artikelgruppen AG in zwei- oder dreidimensional matrixförmiger Anordnung, d.h. in einer oder mehreren Artikellagen, in Kartons oder Schlauchbeutel sekundär verpackt. Auch bei der Sekundärverpackung befinden sich die Packmittelfalten und/oder Siegelnähte unten. Beim bestimmungsgemäßen Öffnen der Sekundärverpackung weist also die i.d.R. mit einem Motiv bedruckte Sichtseite der Artikel A nach oben und die Artikelseite, an welcher sich überlappende Packmittel und/oder Siegelnähte der Primärverpackung befinden, nach unten.

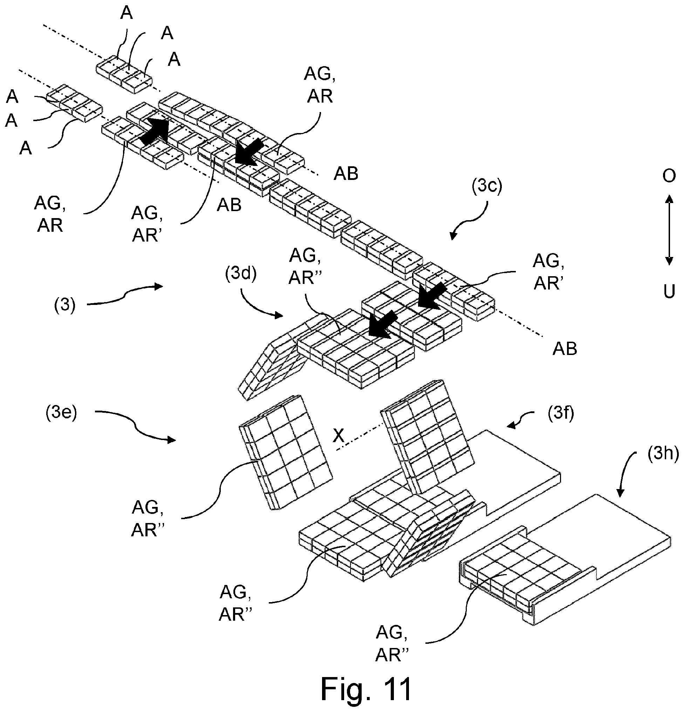

### Zweites Ausführungsbeispiel (Fig. 9 bis 11)

Das zweite Ausführungsbeispiel basiert im Wesentlichen auf dem ersten Ausführungsbeispiel und weist mit Ausnahme der im Folgenden beschriebenen Unterschiede identische und mit identischen Bezugszeichen versehene Merkmale wie das erste Ausführungsbeispiel auf.

Abweichend vom ersten Ausführungsbeispiel werden die Artikel A im zweiten Ausführungsbeispiel in der sog. Arbeitseinrichtung 3 bereits vor der Änderung der Artikelorientierung zu einer dreidimensionalen Artikelgruppe AG gruppiert und in dieser Anordnung in das Drehrad 3e eingegeben. Im Drehrad 3e wird die Artikelorientierung für alle Artikel A der Artikelgruppe AG durch Drehung um 180° um eine außerhalb der Artikelgruppe AG liegende Drehachse X gemeinsam geändert. Anschließend wird die Artikelgruppe AG aus dem Drehrad 3e ausgegeben und in die Sekundärverpackungseinrichtung (nicht dargestellt) eingebracht, wo die Artikelgruppe AG in der dreidimensionalen matrixförmigen Anordung sekundärverpackt wird.

Wie in Fig. 9 dargestellt, werden die primärverpackten Artikel A zunächst einzeln auf parallelen Artikelbahnen AB gefördert. Durch Erzeugen von Artikelstaus auf beiden Artikelbahnen AB werden die Artikel A zunächst zu eindimensionalen Artikelgruppen AG bzw. Artikelreihen AR gruppiert. Die eindimensionalen Artikelgruppen AG bzw. Artikelreihen AR werden auch als erste Artikelgruppen AG bezeichnet. Anschließend wird zunächst eine der Artikelreihen AR aus einer ersten Artikelbahn AB in eine mittlere, dritte Artikelbahn AB eingeschoben. Die bereitstehende Artikelreihe AR aus der zweiten Artikelbahn AB wird sodann auf die in der dritten Artikelbahn AB vorliegende Artikelreihe AR gestapelt. Dazu ist die zweite Artikelbahn AB um eine Artikelhöhe höhenversetzt zur ersten Artikelbahn AB positioniert. Auf der dritten Artikelbahn AB werden die mehrlagig gestapelten Artikelreihen AR' sodann in Förderrichtung gefördert und entlang der Artikelbahn AB bewegt. Die zweidimensionalen Artikelgruppen AG bzw. mehrlagig gestapelten Artikelreihen AR' liegen in (vertikal) matrixförmiger Anordnung vor und werden auch als zweite Artikelgruppen AG bezeichnet. Mit einem Einschieber 3c werden die mehrlagig gestapelten Artikelreihen AR' quer zur dritten Artikelbahn AB verschoben und zu dreidimensionalen Artikelgruppen AG (aus benachbarten und gestapelten Artikelreihen AR"), die auch als dritte Artikelgruppen AG bezeichnet werden, gruppiert. Die dreidimensionalen Artikelgruppen AG werden in die bereitstehenden Artikelgruppenaufnahmen 3d des Drehrades 3e eingegeben und von diesem Drehrad 3e wie oben beschrieben um 180° gedreht.

Weitere Ausgestaltungen der Erfindung sind im Rahmen des Schutzbereichs der anliegenden Patentansprüche möglich.

### Bezugszeichenliste

- 1: Artikelbereitstellungseinrichtung
- 2: Primärverpackungseinrichtung
- 3: Arbeitseinrichtung
- 3a: Förderband
- 3b: Lückenschließer
- 3c: Einschieber
- 3d: Artikelgruppenaufnahme
- 3e: Rad
- 3f: Ausschieber
- 3g: Querschieber
- 3h: Förderband
- 3i: Querschieber
- 4: Sekundärverpackungseinrichtung
- A: Artikel
- AB: Artikelbahn
- AG: Artikelgruppe
- AL: Artikellage
- AR: Artikelreihe
- AR': Gestapelte Artikelreihe
- AR": Aneinandergereihte, gestapelte Artikelreihen
- X: Drehachse des Drehrades 3e

## Patentansprüche

1. Verfahren zur Verpackung kleinstückiger Artikel (A), wie Weich- oder Hartkaramellen, Schokoladenstücke, Pralinen, Konfekte, Brühtabletten, Waschmittel- oder Spülmitteltabs, wobei die Artikel (A) entlang wenigstens einer Artikelbahn (AB) gefördert, einzeln primärverpackt und zu einer Artikelgruppe (AG) gruppiert werden, wobei die Artikelorientierung bezüglich der Artikelbahn (AB) für alle Artikel (A) der Artikelgruppe (AG) gemeinsam geändert wird und die Artikel (A) in matrixförmiger Anordnung sekundärverpackt werden.

2. Verfahren nach dem vorangehenden Anspruch, **dadurch gekennzeichnet, dass** jeder primärverpackte Artikel (A) an einer Artikelseite überlappende Packmittelfalten und/oder eine Siegelnaht der Primärverpackung aufweist, wobei eine Ausrichtung dieser Artikelseite bezüglich der Artikelbahn (AB) bei Änderung der Artikelorientierung verändert wird, wobei vorzugsweise diese Artikelseite vor Änderung der Artikelorientierung nach oben (O) weist und/oder nach Änderung der Artikelorientierung nach unten (U) weist.

3. Verfahren nach einem der vorangehenden Ansprüche, **dadurch gekennzeichnet, dass** die Artikel (A) vor Änderung der Artikelorientierung zu einer eindimensionalen Artikelgruppe (AG) gruppiert werden, vorzugsweise zu einer ersten Artikelgruppe, insbesondere zu einer Artikelreihe, bevorzugt durch Erzeugen eines Produktstaus entlang der Artikelbahn (AB).

4. Verfahren nach einem der vorangehenden Ansprüche, **dadurch gekennzeichnet, dass** die Artikel (A) vor oder nach Änderung der Artikelorientierung zu einer zweidimensionalen Artikelgruppe gruppiert werden, vorzugsweise durch Verbinden mehrerer erster Artikelgruppen zu einer zweiten Artikelgruppe, bevorzugt durch Aneinanderreihen mehrerer Artikelreihen (AR) zu einer Artikellage (AL), insbesondere quer zur Artikelbahn (AB), und/oder durch Stapeln mehrerer Artikelreihen (AR) zu einer mehrlagigen Artikelreihe (AR`), insbesondere quer zur Artikelbahn (AB), wobei besonders bevorzugt alle Artikel (A) der Artikelgruppe (AG) jeweils in derselben Ebene angeordnet sind, ganz besonders bevorzugt in einer die Artikelbahn (AB) einschließenden Ebene.

5. Verfahren einem der vorangehenden Ansprüche, **dadurch gekennzeichnet, dass** die Artikel (A) vor oder nach Änderung der Artikelorientierung zu einer dreidimensionalen Artikelgruppe (AG) gruppiert werden, vorzugsweise durch Verbinden mehrerer zweiter Artikelgruppen (AG) zu einer dritten Artikelgruppe (AG), bevorzugt durch Aneinanderreihen mehrerer mehrlagiger Artikelreihen (AR`), insbesondere quer zur Artikelbahn (AB), und/oder durch Stapeln mehrerer Artikellagen (AL), insbesondere quer zur Artikelbahn (AB).

6. Verfahren nach einem der vorangehenden Ansprüche, **dadurch gekennzeichnet, dass** die Artikel (A) identisch geformt sind, vorzugsweise quaderförmig, bevorzugt würfelförmig.

7. Verfahren nach einem der vorangehenden Ansprüche, **dadurch gekennzeichnet, dass** alle Artikel (A) der Artikelgruppe (AG) jeweils die gleiche Artikelorientierung bezüglich der Artikelbahn (AB) aufweisen.

8. Verfahren nach einem der vorangehenden Ansprüche, **dadurch gekennzeichnet, dass** die Änderung der Artikelorientierung durch Drehung der Artikelgruppe (AG) erfolgt, vorzugsweise um 90° oder 180°, bevorzugt um eine horizontale, insbesondere um eine außerhalb der Artikelgruppe (AG) liegende Drehachse (X), wobei besonders bevorzugt alle Artikel (A) der Artikelgruppe (AG) bei Änderung der Artikelorientierung in derselben Tangentialebene zur Drehachse (X) angeordnet sind.

9. Verfahren nach einem der vorangehenden Ansprüche, **dadurch gekennzeichnet, dass** die Artikel (A) auf einer Mehrzahl von Artikelbahnen (AB) primärverpackt werden und, vorzugsweise nach Gruppierung und ggf. Änderung der Artikelorientierung, zur Sekundärverpackung in eine einzelne Artikelbahn (AB) überführt werden.

10. Verfahren nach einem der vorangehenden Ansprüche, **dadurch gekennzeichnet, dass** die Artikel (A) in dreidimensional matrixförmiger Anordnung sekundärverpackt werden.

11. Verfahren nach einem der vorangehenden Ansprüche, **dadurch gekennzeichnet, dass** die Artikelgruppen (AG) in Kartons oder Schlauchbeuteln sekundärverpackt werden.

12. Vorrichtung zur Verpackung kleinstückiger Artikel, wie Weich- oder Hartkaramellen, Schokoladenstücke, Pralinen, Konfekte, Brühtabletten, Waschmittel- oder Spülmitteltabs, insbesondere nach dem Verfahren nach einem der vorangehenden Ansprüche, wobei die Vorrichtung konfiguriert ist, um die Artikel (A) entlang wenigstens einer Artikelbahn zu fördern, einzeln primär zu verpacken und zu einer Artikelgruppe (AG) zu gruppieren, wobei die Vorrichtung ferner dazu konfiguriert ist, die Artikelorientierung bezüglich der Artikelbahn (AB) für alle Artikel (A) der Artikelgruppe (AG) gemeinsam zu ändern und die Artikel (AG) in matrixförmiger Anordnung sekundär zu verpacken.

13. Vorrichtung nach dem vorangehenden Anspruch, umfassend wenigstens eine der folgenden Einrichtungen:

14. Eine Artikelbereitstellungseinrichtung (1), um Artikel (A) mit vorzugsweise identischer Form, Größe und Ausrichtung auf einer oder mehreren Artikelbahnen (AB) bereitzustellen, wobei die Artikelbereitstellungseinrichtung (1) bevorzugt als Brühwürfelpresse ausgebildet ist.
a. Eine Primärverpackungseinrichtung (2), um die Artikel (A) auf einer oder mehreren Artikelbahnen (AB) einzeln primär zu verpacken, wobei ein Packmittel der Primärverpackung vorzugsweise in Brieffaltung, Bodenfaltung oder Seitenfaltung gefaltet wird.
b. Eine Arbeitseinrichtung (3), um die primärverpackten Artikel (A) in Artikelgruppen (AG) zu gruppieren, und um die Artikelorientierung bezüglich der Artikelbahn (AB) für alle Artikel (A) der Artikelgruppe (AG) gemeinsam zu ändern.
c. Eine Sekundärverpackungseinrichtung (4), um die Artikel in matrixförmiger Anordnung sekundär zu verpacken, vorzugsweise auf einer Artikelbahn (AB), wobei die Sekundärverpackungseinrichtung (4) bevorzugt als Kartonierer oder als Schlauchbeutelverpackungsmaschine ausgebildet ist.

15. Vorrichtung nach dem vorangehenden Anspruch, wobei die Arbeitseinrichtung (3) wenigstens eine der folgenden Einrichtungen aufweist:
a. Eine Fördereinrichtung (3a), um die Artikel (A) einzeln und kontinuierlich entlang der Artikelbahn (AB) zu fördern, vorzugsweise mit einem gesonderten Förderband (3a) für jede Artikelbahn (AB).
b. Eine Gruppiereinrichtung (3b, 3c), um die Artikel (A) zu wenigstens einer folgenden Artikelgruppen (AG) zu gruppieren:
i. Einer eindimensionalen Artikelgruppe (AG), bevorzugt einer Artikelreihe (AR), besonders bevorzugt durch Erzeugen eines Produktstaus entlang der Artikelbahn (AB).
ii. Einer zweidimensionalen Artikelgruppe (AG), bevorzugt einer Artikellage (AL) durch Aneinanderreihen mehrerer Artikelreihen (AR), insbesondere quer zur Artikelbahn (AB), oder einer mehrlagigen Artikelreihe (AR`) durch Stapeln von Artikelreihen (AR), insbesondere quer zur Artikelbahn (AB).
iii. Einer dreidimensionalen Artikelgruppe (AG), bevorzugt durch Aneinanderreihen mehrerer mehrlagiger Artikelreihen (AR`), insbesondere quer zur Artikelbahn (AB), oder durch Stapeln mehrerer Artikellagen (AL), insbesondere quer zur Artikelbahn (AB).
c. Eine Dreheinrichtung (3e), um alle Artikel (A) der Artikelgruppe (AG) gemeinsam um eine Drehachse (X) zu drehen, vorzugsweise um 90° oder 180°, bevorzugt um eine horizontale, insbesondere um eine außerhalb der Artikelgruppe (AG) liegende Drehachse (X), wobei besonders bevorzugt alle Artikel (A) der Artikelgruppe (AG) bei Änderung der Artikelorientierung in einer Tangentialebene zur Drehachse (X) angeordnet sind.
d. Eine Artikelgruppenweiche (3g), um die Artikelgruppen (AB) aus einer Mehrzahl von Artikelbahnen (AB) zur Sekundärverpackung in eine einzelne Artikelbahn (AB) zu überführen.
